# FASCICULE DE BREVET EUROPEEN

(11) **EP 2 814 678 B1**
(45) Date de publication et mention de la délivrance du brevet: **21.11.2018**
(21) Numéro de dépôt: 12809238.4
(22) Date de dépôt: 17.12.2012
(51) Int. Cl.: B60H 1/00

(54) **INSTALLATION DE CHAUFFAGE, VENTILATION ET/OU CLIMATISATION POUR UN HABITACLE DE VÉHICULE AUTOMOBILE**
HEIZUNGS-, BELÜFTUNGS- UND/ODER KLIMAANLAGE FÜR EINEN FAHRGASTRAUM EINES KRAFTFAHRZEUGS
HEATING, VENTILATION AND/OR AIR CONDITIONING FACILITY FOR A PASSENGER COMPARTMENT OF A MOTOR VEHICLE

(30) Priorité: 23.12.2011 FR 1104053
(43) Date de publication de la demande: 24.12.2014
(73) Titulaire: Valeo Systemes Thermiques, 78320 Le Mesnil Saint Denis (FR)
(72) Inventeur: PIERRES, Philippe, F-78990 Elancourt (FR); LISKA, Jan, CP26944 Rakovnik (CZ)
(74) Mandataire: Metz, Gaëlle
(86) Numéro de dépôt international: PCT/EP2012/075702
(87) Numéro de publication internationale: WO 2013/092454

(56) Documents cités:
- EP-A1- 0 709 241
- EP-A1- 1 564 045
- DE-A1- 19 733 319
- DE-A1-102007 025 371
- FR-A1- 2 720 693
- US-A1- 2010 243 199

## Description

La présente invention se rapporte aux circuits de climatisation pour véhicules automobiles. Plus particulièrement, l'invention concerne une installation de chauffage, ventilation et/ou climatisation pour un habitacle de véhicule automobile permettant le contrôle de la température de flux d'air dans une ou plusieurs zones de l'habitacle d'un véhicule telle que divulgué dans US2010/0243199 A1.

Un véhicule automobile est couramment équipé d'une installation de chauffage, de ventilation et/ou de climatisation qui est destinée à réguler les paramètres aérothermiques de l'air distribué dans l'habitacle, en particulier la température d'un flux d'air délivré par l'installation à l'intérieur de l'habitacle.

Dans sa généralité, l'installation comprend un boîtier délimité par des cloisons à travers lesquelles sont ménagées des ouvertures, dont au moins une entrée d'air et au moins une sortie d'air.

De façon connue, le boîtier loge généralement un pulseur pour faire circuler le flux d'air depuis l'entrée d'air vers la sortie d'air. Le boîtier loge aussi des moyens de traitement thermique pour réchauffer et/ou refroidir le flux d'air préalablement à sa distribution à l'intérieur de l'habitacle à travers la sortie d'air. À titre d'exemple, les moyens de traitement thermique peuvent comprendre un évaporateur qui est destiné à refroidir et à déshumidifier l'air le traversant, et un radiateur, éventuellement associé à un radiateur additionnel, qui est destiné à réchauffer l'air qui le traverse.

L'installation peut de plus comprendre plusieurs volets pour contrôler le passage d'air à travers des bouches de distribution correspondant à des sorties s'ouvrant dans l'habitacle du véhicule.

On connaît en particulier des installations avec des sorties pieds avant, c'est-à-dire débouchant dans une zone avant de l'habitacle au niveau des pieds des passagers ; ces sorties étant situées sur les cotés de l'installation, et des sorties pieds arrières situés sur une partie arrière de l'installation, les sorties pieds avant et les sorties pieds arrière s'étendant selon des orientations distinctes.

L'installation comprend des bouches de distribution correspondant à ces différentes sorties, et qui sont agencées selon des plans distincts.

La fermeture et l'ouverture de ces bouches de distribution est généralement assurée par trois ou quatre volets de réglage. En effet, on prévoit généralement pour cela un ou deux volet(s) pour les sorties arrières et deux volets pour les sorties avant qui sont positionnées sur les côtés.

Selon une solution connue, un ou deux volets pour les sorties arrières peuvent être agencés sur un axe central, tandis que deux autres volets pour les sorties avant peuvent être reliés à l'axe central par l'intermédiaire de bielles par exemple. Ces deux autres volets sont décalés par rapport à l'axe central et tournent autour d'axes séparés de cet axe central.

Cette construction nécessite donc un actionnement des volets autour des différents axes et est donc coûteuse. En effet, il faut prévoir un mécanisme complexe pour actionner individuellement chaque volet.

Par ailleurs, l'architecture doit respecter une exigence de répartition de débit, de l'ordre de deux tiers à l'avant et un tiers à l'arrière, entre les sorties avant et arrière débouchant dans l'habitacle au niveau des pieds des passagers.

Une solution connue du document EP1564045 consiste à utiliser une unité de distribution unique pour contrôler le passage d'air à travers les bouches de distribution de façon à réduire le coût de la fonction.

Cependant, la difficulté d'une telle solution réside dans l'exigence de répartition de débit entre les sorties avant et arrières.

Une autre difficulté majeure est que la répartition d'air chaud est encore plus difficile à contrôler du fait que l'air chaud a tendance à se diriger préférentiellement vers les sorties pieds arrière au détriment des sorties pieds avant.

L'invention a donc pour objectif de pallier au moins un des inconvénients de l'art antérieur en proposant une alternative permettant de respecter une exigence de répartition de débit tout en réduisant le coût de la fonction de contrôle du passage d'air à travers des bouches de distribution agencées selon des plans distincts.

À cet effet, l'invention a pour objet une installation de chauffage, ventilation et/ou climatisation pour un habitacle d'un véhicule automobile, comprenant :
- un canal d'air chaud,
- au moins une première sortie d'air et au moins une deuxième sortie d'air,
- au moins un premier conduit de distribution communiquant avec ladite première sortie d'air, et comprenant au moins une première bouche de distribution, et
- au moins un deuxième conduit de distribution communiquant avec ladite deuxième sortie d'air, et comprenant au moins une deuxième bouche de distribution agencée dans un plan distinct de ladite première bouche de distribution,
caractérisée en ce que ledit canal d'air chaud présente une paroi débouchant d'une part sur ladite au moins une deuxième bouche de distribution et d'autre part sur ladite au moins une première bouche de distribution dudit premier conduit de distribution, de sorte que le flux d'air en provenance dudit canal d'air chaud soit réparti entre ladite au moins une première sortie d'air et ladite au moins une deuxième sortie d'air.

Ladite installation peut en outre comporter une ou plusieurs caractéristiques suivantes, prises séparément ou en combinaison :
- l'installation comprend au moins un premier conduit de distribution (25) communiquant avec ladite première sortie d'air (7a), et comprenant au moins une première bouche de distribution (33), et au moins un deuxième conduit de distribution (27) communiquant avec ladite deuxième sortie d'air (7b), et comprenant au moins une deuxième bouche de distribution (35) agencée dans un plan distinct de ladite première bouche de distribution (33), la paroi (43) débouchant d'une part sur ladite au moins une deuxième bouche de distribution (35) et d'autre part sur ladite au moins une première bouche de distribution (33) dudit premier conduit de distribution (25) ;
- le premier conduit de distribution comprend au moins un premier volet pour contrôler le passage du flux d'air à travers ladite première bouche de distribution, le deuxième conduit de distribution comprend au moins un deuxième volet pour contrôler le passage du flux d'air à travers la deuxième bouche de distribution, et lesdits au moins un premier et au moins un deuxième volets sont agencés en rotation autour d'un axe de rotation commun, de façon à contrôler le passage du flux d'air à travers lesdites bouches de distribution ;
- ladite au moins une première sortie d'air correspond à une sortie d'air vers les pieds à l'avant de l'habitacle dudit véhicule, et ladite au moins une deuxième sortie d'air correspond à une sortie d'air vers les pieds à l'arrière de l'habitacle dudit véhicule,
- ledit au moins un premier conduit correspondant à une sortie d'air vers les pieds à l'avant de l'habitacle est dimensionnée de sorte : qu'une première fraction du flux d'air arrivant sur la paroi dudit deuxième conduit de distribution soit dirigée vers ladite au moins une sortie d'air vers les pieds à l'avant, et qu'une deuxième fraction du flux d'air, inférieure à la première fraction, soit dirigée vers ladite au moins une sortie d'air vers les pieds à l'arrière ;
- la première fraction est de l'ordre de deux tiers du flux d'air, et la deuxième fraction est de l'ordre d'un tiers du flux d'air ;
- ladite installation présente au moins une pente inclinée par rapport à ladite au moins une première bouche de distribution ;
- ledit au moins un deuxième volet prend naissance sur l'axe de rotation commun et ledit au moins un premier volet est décalé par rapport audit au moins un deuxième volet par un flanc de liaison solidarisant ledit au moins un premier volet audit au moins un deuxième volet et audit axe de rotation commun ;
- ledit axe de rotation commun, lesdits au moins un premier et au moins un deuxième volets, et ledit flanc de liaison forment une pièce unique ;
- ladite installation comporte deux premières sorties d'air opposées et une deuxième sortie d'air ;
- ladite installation comporte : deux premiers conduits de distribution d'air opposés, comprenant respectivement une première bouche de distribution et un premier volet, et un deuxième conduit de distribution d'air communiquant avec la deuxième sortie d'air et comprenant deux deuxièmes bouches de distribution et deux deuxièmes volets.

Une telle solution permet donc de respecter une exigence de répartition, notamment de deux tiers à l'avant et un tiers à l'arrière, qui s'applique à une architecture avec les sorties avant positionnées sur les côtés de part et d'autre d'une chambre d'air froid de l'installation tandis que les sorties arrière sont positionnées sur une partie arrière de l'installation.

Le terme « arrière » fait ici référence au sens d'écoulement du flux d'air depuis l'avant de l'installation jusqu'à l'arrière de l'installation pour déboucher dans l'habitacle du véhicule.

L'exigence de répartition est respectée du fait de la paroi du canal d'air chaud, forme une zone pour réorienter une fraction du flux d'air vers les sorties avant, notamment du fait qu'elle débouche sur les premières bouches de distribution correspondant aux sorties avant.

D'autres caractéristiques et avantages de l'invention ressortiront de la description suivante, donnée à titre d'exemple, sans caractère limitatif, en regard des dessins annexés sur lesquels :
- la figure 1 est une vue en perspective d'une installation de chauffage, de ventilation et/ou de climatisation selon l'invention,
- la figure 2 est une vue en coupe de l'installation de chauffage de la figure 1 avec des volets de réglage en position fermée,
- la figure 3 est une vue en perspective de l'installation de chauffage de la figure 1 dans laquelle les volets de réglage ne sont pas représentés,
- la figure 4 est une vue en perspective de l'installation de chauffage de la figure 1 avec les volets de réglage en position fermée,
- la figure 5 est une vue en perspective de l'installation de chauffage de la figure 1 avec les volets de réglage en position ouverte,
- la figure 6a est une vue en coupe de l'installation de chauffage de la figure 5,
- la figure 6b est une vue de la figure 6a avec un angle d'inclinaison différent,
- la figure 7 représente de façon schématique une vue de face d'une unité de distribution d'air comprenant les volets de réglage,
- la figure 8 représente de façon schématique une vue arrière de l'unité de distribution d'air de la figure 7, et
- la figure 9 est une vue en coupe de l'installation de chauffage selon un angle d'inclinaison, sur laquelle est représentée une paroi du canal d'air chaud.

Dans ces figures les éléments sensiblement identiques portent les mêmes numéros de référence.

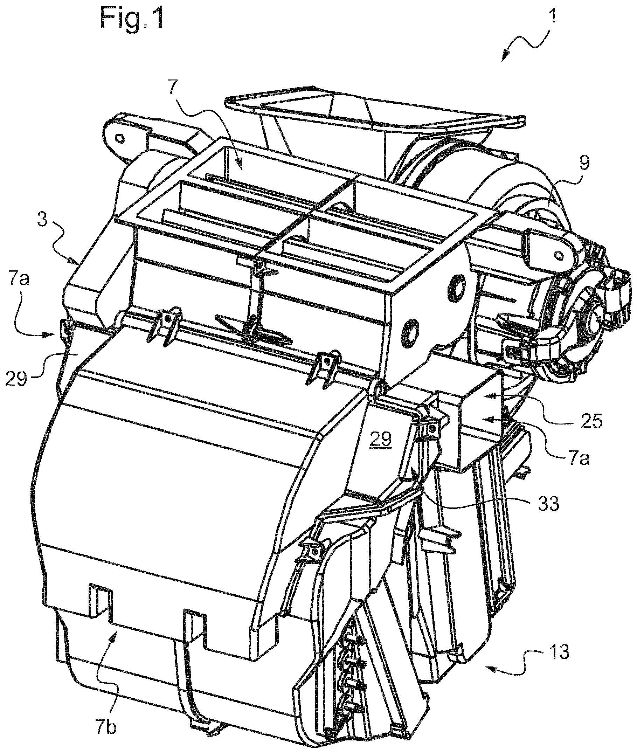

La figure 1 représente une vue en perspective d'une installation 1 de chauffage, de ventilation et/ou de climatisation destinée à équiper un véhicule automobile pour réguler les paramètres aérothermiques du flux d'air distribué dans une ou plusieurs zones de l'habitacle du véhicule.

Dans la présente description, on entend par « zone » un espace de l'habitacle du véhicule dans laquelle est distribué un flux d'air.

Pour une installation de chauffage, ventilation et/ou climatisation dit multi-zones 1, on peut considérer, la zone avant du véhicule en différenciant par exemple la zone avant gauche et la zone avant droite de l'habitacle du véhicule, et la zone arrière du véhicule en différenciant par exemple la zone arrière gauche et la zone arrière droite de l'habitacle du véhicule.

Dans la présente on considère la zone avant gauche, la zone avant droite et la zone arrière.

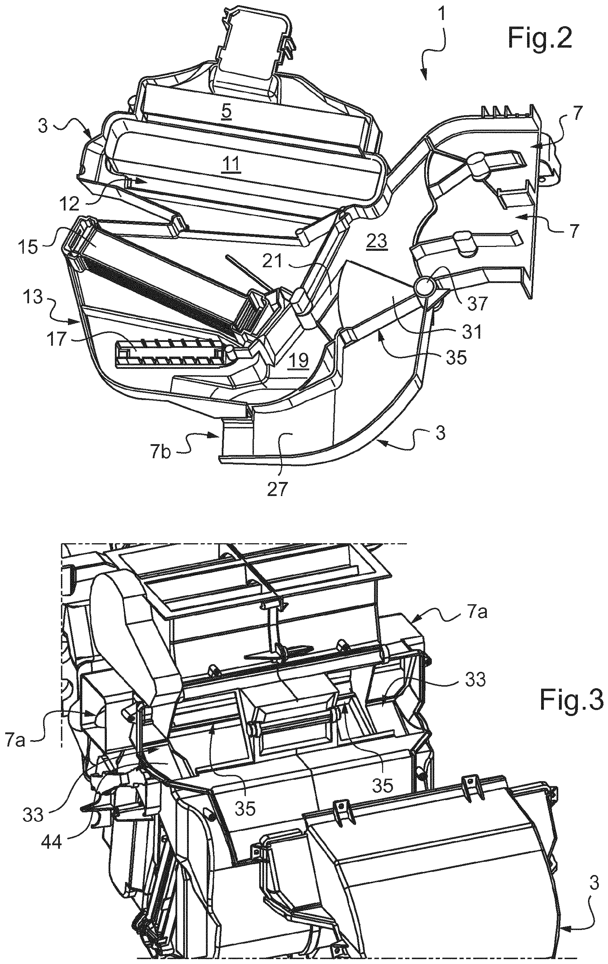

En référence aux figures 1 et 2, l'installation 1 comporte un boîtier 3 comprenant une entrée d'air 5 et plusieurs sorties d'air 7,7a, 7b.

Un groupe moto-ventilateur ou pulseur 9 est agencé en aval de l'entrée d'air 5 pour faire circuler un flux d'air depuis l'entrée d'air 5 dans l'installation 1 et par la suite vers les sorties d'air 7,7a,7b.

Le pulseur 9 permet d'introduire dans le boîtier 3 soit de l'air extérieur prélevé à l'extérieur de l'habitacle, soit de l'air re-circulant prélevé à l'intérieur de l'habitacle, soit encore un mélange des deux.

Chacune des sorties d'air 7,7a,7b est destinée à délivrer un flux d'air respectif dans une zone spécifique de l'habitacle.

Les sorties d'air 7 peuvent comprendre une sortie de ventilation encore appelée sortie d'aération, et/ou une sortie de dégivrage.

Une sortie ventilation permet d'alimenter différentes buses d'aération ou ventilation placées généralement sur la planche de bord du véhicule. Une sortie de dégivrage permet d'alimenter différentes buses de dégivrage ou désembuage disposées généralement à la base du pare-brise et/ou de vitres latérales du véhicule.

Selon le mode de réalisation illustré, le boîtier 3 présente deux sorties d'air « pieds avant » 7a gauche et droite, et une sortie d'air « pieds arrière » 7b.

Les sorties d'air « pieds avant » 7a sont opposées selon le mode de réalisation illustré.

Le flux d'air sortant par une sortie d'air « pieds avant » 7a est destiné à être distribué dans la partie inférieure de la zone avant de l'habitacle du véhicule, dans la région des pieds des passagers, respectivement du côté gauche et du côté droit.

Le flux d'air sortant par la sortie d'air « pieds arrière » 7b est destiné à être distribué dans la partie inférieure de la zone arrière de l'habitacle du véhicule, dans la région des pieds des passagers. Sur la figure 2, seule la sortie « pieds arrière » 7b est visible et non les sorties « pieds avant » 7a visibles sur la figure 1.

Comme visible sur les figures, les sorties « pieds avant » 7a et les sorties « pieds arrière » 7b sont disposées selon des orientations distinctes, de sorte que l'air a tendance à se diriger vers les sorties « pieds arrière ».

On peut notamment prévoir des sorties d'air dans d'autres destinations de l'habitacle, par exemple à destination d'un montant de portière ou à destination du plafond.

Comme cela est mieux visible sur la figure 2, depuis l'entrée d'air 5 et selon le sens d'écoulement du flux d'air, le boîtier peut loger un évaporateur 11 dans une chambre d'air froid 12. Selon le mode de réalisation décrit, les sorties « pieds avant » 7a sont positionnées sur le côté du boîtier 3 de l'installation 1, de part et d'autre de la chambre d'air froid 12.

Le boîtier 3 comporte en outre une chambre de chauffage 13 dans laquelle est monté un dispositif de chauffage, tel qu'un radiateur principal 15 et en complément ou en alternative un radiateur électrique auxiliaire 17, tel qu'un radiateur électrique comportant des organes de chauffage à coefficient de température positive (CTP).

L'évaporateur 11 et le dispositif de chauffage 15, 17 sont des échangeurs thermiques qui permettent de refroidir et/ou réchauffer le flux d'air respectivement en un flux d'air froid et un flux d'air chaud.

Le flux d'air froid est issu du passage du flux d'air à travers l'évaporateur 11 et le flux d'air chaud résulte du passage du flux d'air à travers le radiateur de chauffage 15 et/ou le radiateur additionnel 17 dans la chambre de chauffage 13.

De plus, un canal d'air chaud 19 est ménagé dans le boîtier 3, en aval de la chambre de chauffage 13 dans le sens d'écoulement du flux d'air.

Un organe de mixage d'air, tel qu'un volet de mixage 21, monté pivotant permet de répartir en proportion voulue le flux d'air froid et le flux d'air chaud alimentant une chambre de mixage 23 permettant de délivrer le flux d'air vers les différentes sorties d'air 7,7a,7b.

Le volet de mixage 21 est mobile entre une position de fermeture et une position d'ouverture. Dans la position de fermeture, le volet de mixage 21 interdit le passage du flux d'air froid vers la chambre de mixage 23 tout en autorisant un passage du flux d'air chaud issu de la chambre de chauffage 13 vers la chambre de mixage 23. Dans la position d'ouverture, le volet de mixage 21 autorise le passage du flux d'air froid vers la chambre de mixage 23 tout en interdisant simultanément un passage du flux d'air chaud.

Le volet de mixage 21 est agencé de telle façon qu'il calibre, dans des positions intermédiaires, la proportion du flux d'air froid et du flux d'air chaud entrant dans la chambre de mixage 23. Selon la position du volet de mixage 21, la chambre de mixage 23 est alimentée par un flux d'air totalement froid ou par un flux d'air totalement chaud ou des portions de flux d'air chaud et de flux d'air froid pour obtenir un flux d'air mixé.

En outre, le boîtier 3 comporte des conduits de distribution pour la circulation du flux d'air communiquant respectivement avec une sortie d'air 7,7a,7b associée.

Plus précisément, le boîtier 3 comporte au moins un premier conduit de distribution 25 communiquant avec une sortie d'air 7a « pieds avant ». Selon le mode de réalisation illustré le boîtier 3 comporte deux premiers conduits de distribution 25 pour chaque sortie d'air « pieds avant » 7a.

De plus, le boîtier 3 comprend deuxième un conduit de distribution 27 communiquant avec la sortie d'air « pieds arrière » 7b.

L'installation 1 comporte en outre des volets pivotants de réglage 29,31, pour contrôler le passage d'air à travers des bouches de distribution 33,35 des conduits de distribution 25,27. Ces volets de réglage 29,31 permettent d'autoriser l'air à circuler par ces sorties « pieds avant » 7a et « pieds arrière » 7b.

Plus précisément, un premier conduit de distribution 25 comprend une première bouche de distribution 33 (visible sur la figure 3) correspondant à une sortie « pieds avant » 7a.

Selon l'exemple illustré, l'installation 1 comporte deux sorties « pieds avant » 7a côté gauche et côté droit ; deux premiers conduits de distribution 25 et deux premières bouches de distribution 33 sont donc pourvus.

De façon similaire, le deuxième conduit de distribution 27 comprend une deuxième bouche de distribution 35 (mieux visible sur la figure 2) correspondant à une sortie « pieds arrière » 7b.

La deuxième bouche de distribution 35 est disposée selon un plan distinct d'une première bouche de distribution 33.

Selon l'exemple illustré sur la figure 3, le deuxième conduit de distribution 27 comprend par exemple deux deuxièmes bouches de distribution 35 correspondant à la sortie « pieds arrière »7b.

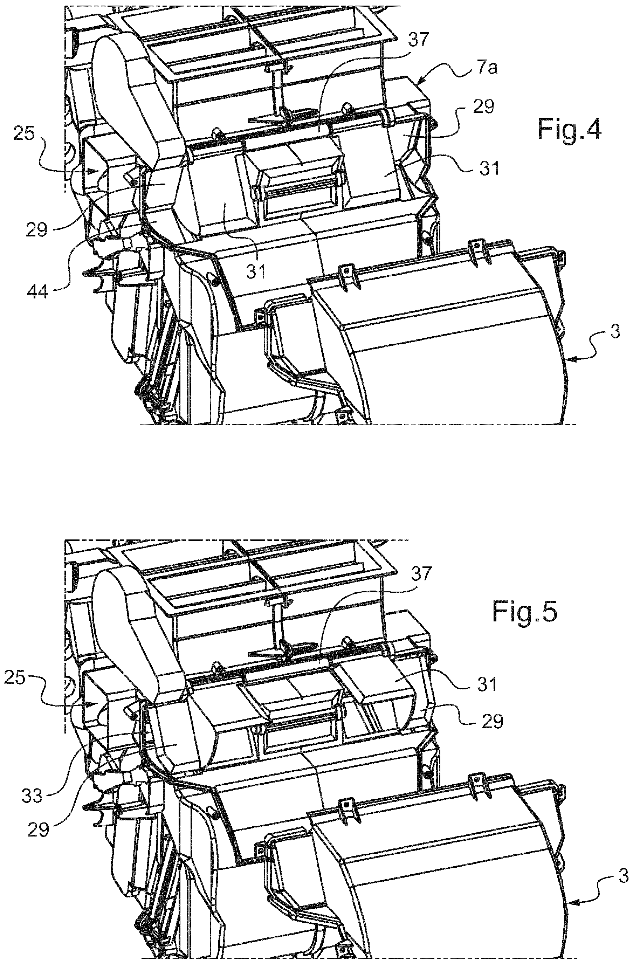

En se référant aux figures 4 et 5, l'installation 1 comporte au moins un premier volet de réglage 29 associé à une première bouche de distribution 33 pour contrôler le passage d'air à travers la première bouche de distribution 33 associée.

Deux premiers volets de réglage 29 sont par exemple prévus pour contrôler le passage d'air à travers les deux premières bouches de distribution 33, des premiers conduits de distribution d'air 25 s'ouvrant dans la zone avant de l'habitacle du véhicule.

À l'aide de ces premiers volets de réglage 29, la fermeture ou le niveau d'ouverture des premières bouches de distribution 33 peut être contrôlé(e).

De façon similaire, l'installation 1 comporte au moins un deuxième volet de réglage 31 associé à une deuxième bouche de distribution 35 pour contrôler le passage d'air à travers la deuxième bouche de distribution 35 associée.

Deux deuxièmes volets de réglage 31 sont par exemple prévus pour contrôler le passage d'air à travers les deux deuxièmes bouches de distribution 35, du deuxième conduit de distribution d'air 27 s'ouvrant dans la zone arrière de l'habitacle du véhicule.

À l'aide de ces deuxièmes volets de réglage 31, la fermeture ou le niveau d'ouverture des deuxièmes bouches de distribution 35 peut être contrôlé(e).

De plus, les premiers 29 et deuxièmes 31 volets contrôlent le passage d'air à travers les premières 33 et deuxièmes 35 bouches de distribution par rotation autour d'un axe de rotation commun 37.

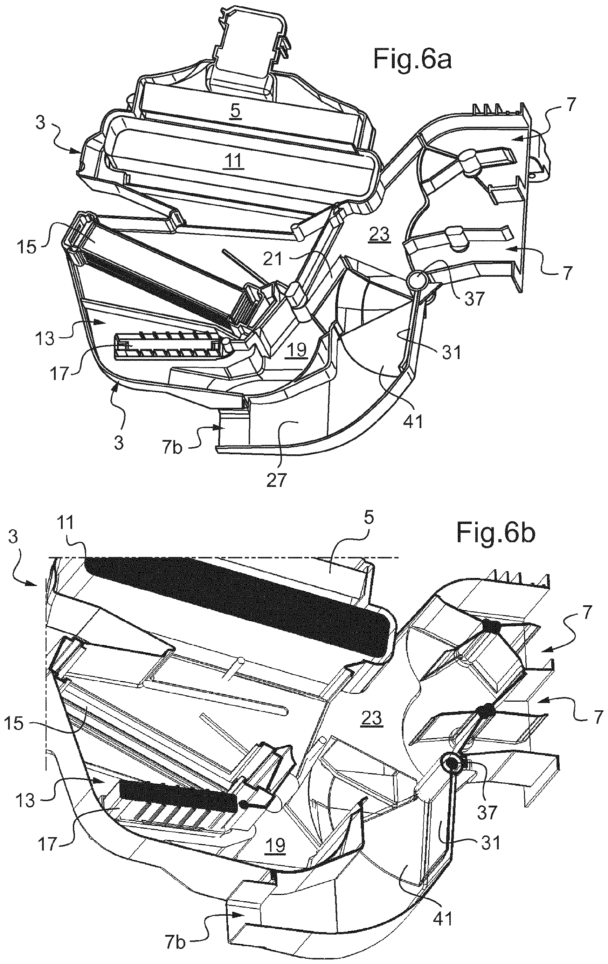

En effet, les premiers et deuxièmes volets 29,31 sont mobiles entre une première position de fermeture (figures 2 et 4) et une position d'ouverture (figures 5 et 6a , 6b).

En référence aux figures 2 à 4, dans la position de fermeture, chaque premier volet 29 ferme une première bouche de distribution 33 correspondant à une sortie « pieds avant » 7a côté gauche respectivement droit, et chaque deuxième volet 31 ferme une deuxième bouche de distribution 35 correspondant à la sortie « pieds arrière » 7b.

Ainsi, les volets de réglage 29,31 interdisent le passage du flux d'air vers les sorties « pieds avant » 7a et « pieds arrière » 7b.

En référence aux figures 3, 5 et 6a, 6b, dans la position d'ouverture, les volets 29,31 autorisent un passage du flux d'air vers les sorties « pieds avant » 7a et « pieds arrière » 7b.

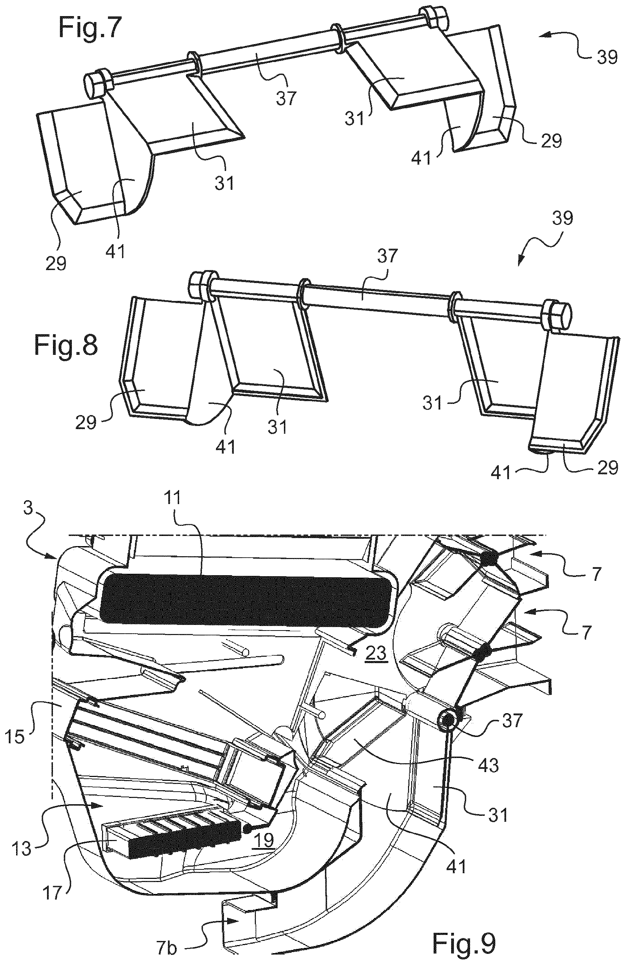

Les figures 7 et 8 représentent de façon schématique une unité de distribution d'air 39 comprenant l'axe de rotation commun 37 qui porte les premiers 29 et les deuxièmes 31 volets.

Ainsi, les volets 29,31 et l'axe de rotation commun 37 forment une seule et même pièce. Autrement dit, l'unité de distribution d'air 39 forme une pièce unique et monocorps.

Par conséquent, la cinématique est donc simplifiée par rapport aux solutions de l'art antérieur prévoyant des volets pivotants autour d'axes de rotation distincts.

L'unité de distribution d'air 39 peut être une pièce moulée. Cette unité de distribution d'air 39 peut être constituée en matériau plastique.

Selon le mode de réalisation illustré, les volets 29,31 sont sensiblement plans et sensiblement rectangulaires.

Bien sûr, les volets 29,31 de l'unité de distribution d'air 39 peuvent avoir des formes différentes adaptées pour contrôler le passage d'air à travers les bouches de distribution 33,35.

Par ailleurs, selon le mode de réalisation illustré, un deuxième volet 31 prend naissance sur l'axe de rotation commun 37.

Plus précisément, un deuxième volet 31 peut prendre naissance au niveau d'une extrémité de l'axe de rotation commun 37. Cet agencement est avantageux dans le cas où il y a deux deuxièmes volets 31 pour contrôler le passage du flux d'air à travers deux bouches de distribution, comme selon le mode de réalisation décrit et représenté sur les figures.

On pourrait prévoir en variante, un seul deuxième volet 31, prenant naissance par exemple au niveau d'une partie centrale de l'axe de rotation commun 37.

Selon le mode de réalisation décrit, un premier 29 et un deuxième volets 31 sont disposés au niveau d'une extrémité de l'axe de rotation commun 37, tandis qu'un autre premier volet 29 et un autre deuxième deuxième volet 31 sont disposés au niveau de l'autre extrémité de l'axe de rotation commun 37.

Un premier volet 29 est décalé par rapport à un deuxième volet 31 grâce à un flanc de liaison 41 reliant solidairement le premier volet 29 au deuxième volet 31 et à l'axe de rotation commun 37.

Plus particulièrement, les deux premiers volets 29 sont solidaires des deux deuxièmes volets 31 par l'intermédiaire de deux flancs de liaison 41.

Ainsi, la structure monocorps de l'unité de distribution d'air 39 comporte un axe de rotation commun 37 portant les quatre volets 29,31 et les deux flancs de liaison 41.

Les volets 29,31, peuvent, en tournant autour de l'axe de rotation commun 37, contrôler le passage d'air à travers les bouches de distribution 33,35 disposées selon des plans distincts.

Le contrôle du passage d'air à travers les bouches de distribution 33,35 correspondant aux sorties « pieds avant » 7a et « pieds arrière » 7b, se fait donc en même temps à l'aide de l'unité de distribution d'air 39.

Bien entendu, la forme, la disposition, ou le nombre de volets peuvent être adaptés en fonction du nombre, de la forme ou de la disposition relative des bouches de distribution 33,35 de l'installation 1.

De plus, en se référant à la figure 9, le canal d'air chaud 19 présente une paroi 43 qui participe à la répartition du flux d'air entre les sorties « pieds avant » 7a et la sortie « pieds arrière » 7b.

Cette paroi 43 est agencée dans la continuité du canal d'air chaud 19 et en aval du canal d'air chaud 19 selon le sens d'écoulement du flux d'air.

Cette paroi 43 participe à la répartition du flux d'air chaud entre les sorties « pieds avant » 7a et la sortie « pieds arrière » 7b.

Pour ce faire, cette paroi 43 débouche sur la ou les premières bouches de distribution 33.

Bien entendu, la paroi 43 débouche aussi sur la ou les deuxièmes bouches de distribution 35 du deuxième conduit 27.

De plus, comme on le voit mieux sur la figure 6b, la paroi 43 ne débouche pas sur la deuxième bouche de distribution 35 sur toute sa section, de façon à laisser un passage pour le flux d'air provenant du canal d'air chaud 19 vers la sortie « pieds arrière » 7b.

Par ailleurs, de façon à respecter l'architecture de l'installation avec les sorties « pieds avant » 7a sur les côtés de part et d'autre de la chambre d'air froid 12, et au contraire les sorties « pieds arrière » 7b à l'arrière de l'installation 1, selon le sens d'écoulement du flux d'air, les premiers conduits 25 présentent respectivement une pente 44 légèrement inclinée par rapport aux premières bouches de distribution 33. L'installation 1 présente donc des pentes 44 inclinées par rapport aux premières bouches de distribution 33 qui débouchent sur les premières bouches de distribution 33.

Les sorties d'air « pieds avant » 7a et la sortie d'air « pieds arrière » 7b sont donc en communication aéraulique par la paroi 43 du canal d'air chaud 19.

Comme on le voit mieux sur la figure 6b l'air chaud provenant du canal d'air chaud 19 est naturellement conduit vers la sortie « pieds arrière » 7b du fait de la forme du système 1 ; l'air est donc naturellement dirigé vers le bas en référence à la figure 1 et n'a pas tendance à aller vers les côtés du système 1.

Ainsi, lorsque les volets 29,31 sont en position d'ouverture, c'est-à-dire laissant libre d'accès les bouches de distribution 33,35, le flux d'air provenant du canal d'air chaud 19 est bien entendu dirigé vers la sortie «pieds arrière» 7b à l'extrémité du deuxième conduit de distribution 27.

Mais, du fait de la paroi 43 du canal d'air chaud 19 débouchant également sur les premières bouches de distribution 33 correspondant aux sorties « pieds avant » 7a, le flux d'air provenant du canal d'air chaud 19, est dévié vers les sorties « pieds avant » 7a, lorsque les volets 39,41 sont ouverts, en passant à travers les premières bouches de distribution 33.

Cette paroi 43 (figure 9) permet donc de diriger l'air également vers les côtés en référence à la figure 1, pour être distribué aux sorties « pieds avant » 7a en plus de la distribution à la sortie « pieds arrière » 7b.

Autrement dit, le canal d'air chaud 19 présente une zone dédiée aux sorties « pieds avant » 7a.

De plus cette paroi 43 est selon l'exemple illustré, sensiblement inclinée par rapport à l'axe de rotation 37 des volets 29, 31.

Une première fraction du flux d'air provenant du canal d'air chaud 19 est donc dirigée vers les sorties d'air « pieds avant » 7a, tandis qu'une deuxième fraction du flux d'air, est dirigée vers la sortie d'air « pieds arrière » 7b.

Selon les normes automobiles, la deuxième fraction du flux d'air dirigée vers la sortie « pieds arrière » 7b doit être inférieure à la première fraction dirigée vers les sorties « pieds avant » 7a. Il s'agit notamment d'une répartition de l'ordre de deux tiers du flux d'air vers les sorties « pieds avant » 7a et un tiers du flux d'air vers la sortie « pieds arrière » 7b.

Afin de contrôler la répartition du flux d'air entre les sorties d'air « pieds avant » 7a et « pieds arrière » 7b, les premiers conduits de distribution 25 correspondant aux sorties « pieds avant » 7a sont dimensionnés en conséquence.

Plus les premiers conduits 25 sont élargis, plus le flux d'air est réorienté vers ces premiers conduits de distribution 25 et par la suite vers les sorties « pieds avant » 7a.

Les dimensions sont donc adaptées en fonction des besoins par l'homme du métier.

On comprend donc qu'une telle installation 1 comportant un canal d'air chaud avec une zone dédiée à l'écoulement de l'air vers les sorties « pieds avant » 7a, et une unité 39 permettant de contrôler en même temps le passage du flux d'air à travers les premières et deuxièmes bouches de distribution 33,35, est simplifiée par rapport à l'état de l'art et permet en outre de respecter une répartition prédéfinie entre les sorties d'air débouchant dans l'habitacle du véhicule, notamment au niveau des pieds des passagers dans la zone avant et dans la zone arrière de l'habitacle.

## Revendications

1. Installation de chauffage, ventilation et/ou climatisation pour un habitacle d'un véhicule automobile, comprenant :
- un canal d'air chaud (19),
- au moins une première sortie d'air (7a) et au moins une deuxième sortie d'air (7b), lesdites au moins une première sortie d'air (7a) et au moins une deuxième sortie d'air (7b) étant agencées selon des orientations distinctes de sorte que l'air chaud est dirigé préférentiellement vers ladite au moins une deuxième sortie d'air chaud (7b),
**caractérisée en ce que** ledit canal d'air chaud (19) présente une paroi (43) de guidage de l'air vers ladite au moins une première sortie d'air (7a).

2. Installation selon la revendication 1, **caractérisée en ce qu'**elle comprend :
- au moins un premier conduit de distribution (25) communiquant avec ladite première sortie d'air (7a), et comprenant au moins une première bouche de distribution (33), et
- au moins un deuxième conduit de distribution (27) communiquant avec ladite deuxième sortie d'air (7b), et comprenant au moins une deuxième bouche de distribution (35) agencée dans un plan distinct de ladite première bouche de distribution (33),
la paroi (43) débouchant d'une part sur ladite au moins une deuxième bouche de distribution (35) et d'autre part sur ladite au moins une première bouche de distribution (33) dudit premier conduit de distribution (25).

3. Installation selon la revendication 1 ou la revendication 2, **caractérisée en ce que** :
- le premier conduit de distribution (25) comprend au moins un premier volet (29) pour contrôler le passage du flux d'air à travers ladite première bouche de distribution (33), **en ce que**
- le deuxième conduit de distribution (27) comprend au moins un deuxième volet (31) pour contrôler le passage du flux d'air à travers la deuxième bouche de distribution (35), et **en ce que**
- lesdits au moins un premier (29) et au moins un deuxième (31) volets sont agencés en rotation autour d'un axe de rotation commun (37), de façon à contrôler le passage du flux d'air à travers lesdites bouches de distribution (33,35).

4. Installation selon l'une des revendications 1 à 3, **caractérisée en ce que** ladite au moins une première sortie d'air (7a) correspond à une sortie d'air vers les pieds à l'avant de l'habitacle dudit véhicule, et **en ce que** ladite au moins une deuxième sortie d'air (7b) correspond à une sortie d'air vers les pieds à l'arrière de l'habitacle dudit véhicule.

5. Installation selon la revendication 4, **caractérisée en ce que** ledit au moins un premier conduit (25) correspondant à une sortie d'air vers les pieds à l'avant (7a) de l'habitacle est dimensionnée de sorte :
- qu'une première fraction du flux d'air arrivant sur la paroi (43) dudit deuxième conduit de distribution (27) soit dirigée vers ladite au moins une sortie d'air vers les pieds à l'avant (7a), et
- qu'une deuxième fraction du flux d'air, inférieure à la première fraction, soit dirigée vers ladite au moins une sortie d'air vers les pieds à l'arrière (7b).

6. Installation selon la revendication 5, **caractérisée en ce que** la première fraction est de l'ordre de deux tiers du flux d'air, et la deuxième fraction est de l'ordre d'un tiers du flux d'air.

7. Installation selon l'une quelconque des revendications précédentes, **caractérisé en ce qu'**elle présente au moins une pente (44) inclinée par rapport à ladite au moins une première bouche de distribution (33).

8. Installation selon la revendication 3 prise en combinaison avec l'une quelconque des revendications précédentes, **caractérisée en ce que** ledit au moins un deuxième volet (31) prend naissance sur l'axe de rotation commun (37) et **en ce que** ledit au moins un premier volet (29) est décalé par rapport audit au moins un deuxième volet (31) par un flanc de liaison (41) solidarisant ledit au moins un premier volet (29) audit au moins un deuxième volet (31) et audit axe de rotation commun (37).

9. Installation selon la revendication 8, **caractérisée en ce que** ledit axe de rotation commun (37), lesdits au moins un premier (29) et au moins un deuxième (31) volets, et ledit flanc de liaison (41) forment une pièce unique (39).

10. Installation selon l'une quelconque des revendications précédentes, **caractérisée en ce qu'**elle comporte deux premières sorties d'air (7a) opposées et une deuxième sortie d'air (7b).

11. Installation selon la revendication 10, **caractérisée en ce qu'**elle comporte :
- deux premiers conduits de distribution d'air (25) opposés, comprenant respectivement une première bouche de distribution (33) et un premier volet (29), et
- un deuxième conduit de distribution d'air (27) comprenant deux deuxièmes bouches de distribution (35) et deux deuxièmes volets (31).

## Patentansprüche

1. Heizungs-, Lüftungs- und/oder Klimatisierungsanlage für einen Innenraum eines Kraftfahrzeugs, die enthält:
- einen Warmluftkanal (19),
- mindestens einen ersten Luftaustritt (7a) und mindestens einen zweiten Luftaustritt (7b), wobei der mindestens eine erste Luftaustritt (7a) und der mindestens eine zweite Luftaustritt (7b) gemäß unterschiedlichen Ausrichtungen angeordnet sind, so dass die Warmluft vorzugsweise zum mindestens einen zweiten Warmluftaustritt (7b) gerichtet ist,
**dadurch gekennzeichnet, dass** der Warmluftkanal (19) eine Wand (43) zum Leiten der Luft zum mindestens einen ersten Luftaustritt (7a) enthält.

2. Anlage nach Anspruch 1, **dadurch gekennzeichnet, dass** sie enthält:
- mindestens eine erste Verteilungsrohrleitung (25), die mit dem ersten Luftaustritt (7a) in Verbindung steht und mindestens eine erste Verteilungsöffnung (33) enthält, und
- mindestens eine zweite Verteilungsrohrleitung (27), die mit dem zweiten Luftaustritt (7b) in Verbindung steht und mindestens eine zweite Verteilungsöffnung (35) enthält, die in einer anderen Ebene als die erste Verteilungsöffnung (33) angeordnet ist,
wobei die Wand (43) einerseits an der mindestens einen zweiten Verteilungsöffnung (35) und andererseits an der mindestens einen ersten Verteilungsöffnung (33) der ersten Verteilungsrohrleitung (25) mündet.

3. Anlage nach Anspruch 1 oder Anspruch 2, **dadurch gekennzeichnet, dass**:
- die erste Verteilungsrohrleitung (25) mindestens eine erste Klappe (29) enthält, um den Durchgang des Luftstroms durch die erste Verteilungsöffnung (33) zu kontrollieren, dass
- die zweite Verteilungsrohrleitung (27) mindestens eine zweite Klappe (31) enthält, um den Durchgang des Luftstroms durch die zweite Verteilungsöffnung (35) zu kontrollieren, und dass
- die mindestens eine erste (29) und mindestens eine zweite (31) Klappe in Drehung um eine gemeinsame Drehachse (37) angeordnet sind, um den Durchgang des Luftstroms durch die Verteilungsöffnungen (33, 35) zu kontrollieren.

4. Anlage nach einem der Ansprüche 1 bis 3, **dadurch gekennzeichnet, dass** der mindestens eine erste Luftaustritt (7a) einem Luftaustritt zu den Füßen im vorderen Bereich des Innenraums des Fahrzeugs entspricht, und dass der mindestens eine zweite Luftaustritt (7b) einem Luftaustritt zu den Füßen im hinteren Bereich des Innenraums des Fahrzeugs entspricht.

5. Anlage nach Anspruch 4, **dadurch gekennzeichnet, dass** die mindestens eine erste Rohrleitung (25), die einem Luftaustritt zu den Füßen im vorderen Bereich (7a) des Innenraums entspricht, so bemessen ist, dass:
- ein erster Anteil des an der Wand (43) der zweiten Verteilungsrohrleitung (27) ankommenden Luftstroms zum mindestens einen Luftaustritt zu den Füßen im vorderen Bereich (7a) gerichtet ist, und
- ein zweiter Anteil des Luftstroms, geringer als der erste Anteil, zum mindestens einen Luftaustritt zu den Füßen im hinteren Bereich (7b) gerichtet ist.

6. Anlage nach Anspruch 5, **dadurch gekennzeichnet, dass** der erste Anteil in der Größenordnung von zwei Dritteln des Luftstroms liegt, und der zweite Anteil in der Größenordnung von einem Drittel des Luftstroms liegt.

7. Anlage nach einem der vorhergehenden Ansprüche, **dadurch gekennzeichnet, dass** sie mindestens eine Schräge (44) aufweist, die bezüglich der mindestens einen Verteilungsöffnung (33) geneigt ist.

8. Anlage nach Anspruch 3, in Kombination mit einem der vorhergehenden Ansprüche, **dadurch gekennzeichnet, dass** die mindestens eine zweite Klappe (31) auf der gemeinsamen Drehachse (37) anfängt, und dass die mindestens eine erste Klappe (29) bezüglich der mindestens einen zweiten Klappe (31) durch eine Verbindungsflanke (41) versetzt ist, die die mindestens eine erste Klappe (29) fest mit der mindestens einen zweiten Klappe (31) und mit der gemeinsamen Drehachse (37) verbindet.

9. Anlage nach Anspruch 8, **dadurch gekennzeichnet, dass** die gemeinsame Drehachse (37), die mindestens eine erste (29) und mindestens eine zweite (31) Klappe und die Verbindungsflanke (41) ein einziges Bauteil (39) bilden.

10. Anlage nach einem der vorhergehenden Ansprüche, **dadurch gekennzeichnet, dass** sie zwei gegenüberliegende erste Luftaustritte (7a) und einen zweiten Luftaustritt (7b) aufweist.

11. Anlage nach Anspruch 10, **dadurch gekennzeichnet, dass** sie aufweist:
- zwei gegenüberliegende erste Luftverteilungsrohrleitungen (25), die je eine erste Verteilungsöffnung (33) und eine erste Klappe (29) enthalten, und
- eine zweite Luftverteilungsrohrleitung (27), die zwei zweite Verteilungsöffnungen (35) und zwei zweite Klappen (31) enthält.

## Claims

1. Heating, ventilation and/or air-conditioning installation for a car interior of a motor vehicle, comprising:
- a hot-air duct (19),
- at least one first air outlet (7a) and at least one second air outlet (7b), said at least one first air outlet (7a) and at least one second air outlet (7b) being arranged in different orientations such that the hot air is directed preferentially towards said at least one second hot-air outlet (7b),
**characterized in that** said hot-air duct (19) has a wall (43) for guiding air towards said at least one first air outlet (7a).

2. Installation according to Claim 1, **characterized in that** it comprises:
- at least one first distribution duct (25) communicating with said first air outlet (7a) and comprising at least one first distribution outlet (33), and
- at least one second distribution duct (27) communicating with said second air outlet (7b) and comprising at least one second distribution outlet (35) arranged in a different plane from said first distribution outlet (33),
the wall (43) leading for the one part to said at least one second distribution outlet (35) and for the other part to said at least one first distribution outlet (33) of said first distribution duct (25).

3. Installation according to Claim 1 or Claim 2, **characterized in that**:
- the first distribution duct (25) comprises at least one first flap (29) for controlling the passage of the air flow through said first distribution outlet (33), **in that**
- the second distribution duct (27) comprises at least one second flap (31) for controlling the passage of the air flow through the second distribution outlet (35), and **in that**
- said at least one first (29) and at least one second (31) flap are arranged so as to be rotatable about a common rotary shaft (37), so as to control the passage of the air flow through said distribution outlets (33, 35).

4. Installation according to one of Claims 1 to 3, **characterized in that** said at least one first air outlet (7a) corresponds to an air outlet towards the feet in the front of the car interior of said vehicle, and **in that** said at least one second air outlet (7b) corresponds to an air outlet towards the feet in the rear of the car interior of said vehicle.

5. Installation according to Claim 4, **characterized in that** said at least one first duct (25) corresponding to an air outlet (7a) towards the feet in the front of the car interior is dimensioned such that:
- a first fraction of the air flow arriving at the wall (43) of said second distribution duct (27) is directed towards said at least one air outlet (7a) towards the feet in the front, and
- a second fraction of the air flow, smaller than the first fraction, is directed towards said at least one air outlet (7b) towards the feet in the rear.

6. Installation according to Claim 5, **characterized in that** the first fraction is around two thirds of the air flow, and the second fraction is around one third of the air flow.

7. Installation according to any one of the preceding claims, **characterized in that** it has at least one slope (44) inclined with respect to said at least one first distribution outlet (33).

8. Installation according to Claim 3 in combination with any one of the preceding claims, **characterized in that** said at least one second flap (31) starts at the common rotary shaft (37), and **in that** said at least one first flap (29) is offset with respect to said at least one second flap (31) by a connecting flank (41) that secures said at least one first flap (29) to said at least one second flap (31) and to said common rotary shaft (37).

9. Installation according to Claim 8, **characterized in that** said common rotary shaft (37), said at least one first (29) and at least one second (31) flap, and said connecting flank (41) form a single part (39).

10. Installation according to any one of the preceding claims, **characterized in that** it has two opposite first air outlets (7a) and one second air outlet (7b).

11. Installation according to Claim 10, **characterized in that** it has:
- two opposite first air distribution ducts (25), respectively comprising a first distribution outlet (33) and a first flap (29), and
- one second air distribution duct (27) comprising two second distribution outlets (35) and two second flaps (31).
